# EUROPÄISCHE PATENTSCHRIFT

(11) **EP 2 850 719 B1**
(45) Veröffentlichungstag und Bekanntmachung des Hinweises auf die Patenterteilung: **26.04.2017**
(21) Anmeldenummer: 12732816.9
(22) Anmeldetag: 25.06.2012
(51) Int. Cl.: H02K 1/18

(54) **STATORANORDNUNG FÜR EINE ELEKTRISCHE MASCHINE**
STATOR ARRANGEMENT FOR AN ELECTRICAL MACHINE
ENSEMBLE STATOR POUR MACHINE ELECTRIQUE

(43) Veröffentlichungstag der Anmeldung: 25.03.2015
(73) Patentinhaber: Siemens Aktiengesellschaft, 80333 München (DE)
(72) Erfinder: WINKLER, Günther, A-4785 Haibach (AT)
(86) Internationale Anmeldenummer: PCT/EP2012/062214
(87) Internationale Veröffentlichungsnummer: WO 2014/000757

(56) Entgegenhaltungen:
- FR-A- 1 325 464
- US-A1- 2012 133 145

## Beschreibung

Die vorliegende Erfindung betrifft eine Statoranordnung für eine elektrische Maschine. Überdies betrifft die vorliegende Erfindung eine elektrische Maschine mit einer solchen Statoranordnung.

Bei sehr großen elektrischen Maschinen, insbesondere langsam laufenden Torque-Motoren und Generatoren, ist es von Vorteil, das Statorpaket nicht als Ganzes zu fertigen. Deshalb wird das Statorpaket mit Wicklungen in segmentierter Bauweise, d.h. in Teilsegmenten, die später zu einem geschlossenen Ring montiert werden, aufgebaut. Bei großen Direct-Drive-Windkraftgeneratoren mit Außenläufer erfolgt der Einbau der einzelnen Statorsegmente des Innenständers mittels Verschraubung der Statorsegmente an zwei große Flansche, die beispielsweise an der Antriebseite und der Nicht-Antriebsseite angeordnet sind. Die Flanschverbindungen dienen der Drehmomentabstützung. Zudem werden die einzelnen Statorsegmente untereinander an den seitlichen Stoßstellen verschraubt. Diese Generatoren haben den Vorteil, dass sie radial nach innen relativ viel Bauraum für die Flanschverbindungen zur Verfügung stellen können.

Insbesondere bei elektrischen Maschinen mit Innenläufer, d. h. mit klassischem Außenständer in einem geschlossenen Gehäuse, ist der zur Verfügung stehende Bauraum extrem beengt. Aus diesem Grund ist einer derartige Verbindung der einzelnen Statorsegmente bei kompakten Generatoren, wie sie beispielsweise für Unterwasser-Strömungsturbinen eingesetzt werden, nicht ausführbar. Des Weiteren sind elektrische Maschinen mit Innenläufer für Rohrmühlen-Antriebe oder Wasserkraft-Generatoren mit einem großen Durchmesser bekannt, bei denen der Stator aus einzelnen Statorsegmenten aufgebaut ist. Hier werden aber die Statorsegmente nicht in einem geschlossenen Gehäuse verschraubt.

Die US 2012/133145 A1 beschreibt eine Windkraftanlage, die einen aus mehreren Statorsegmenten bestehenden Stator umfasst. Dabei sind die Statorsegmente mittels einer Schwalbenschwanzverbindung an einem Strukturelement befestigt.

In der FR 1 325 464 A ist eine Statoranordnung beschrieben, die mehrere Statorsegmente umfasst, die an einem Gehäuse befestigt sind. Zum Befestigen der Statorsegmente an dem Gehäuse sind an dem Gehäuse Passfedern und an den Statorsegmenten zu den Passfedern korrespondierende Passfedernuten vorgesehen.

Es ist Aufgabe der vorliegenden Erfindung, eine Statoranordnung für eine elektrische Maschine der eingangs genannten Art bereitzustellen, die einfacher und kostengünstiger aufgebaut werden kann.

Diese Aufgabe wird durch eine Statoranordnung gemäß Patentanspruch 1 und durch eine elektrische Maschine gemäß Patentanspruch 7 gelöst. Vorteilhafte Weiterbildungen der vorliegenden Erfindung sind in den Unteransprüchen angegeben.

Die erfindungsgemäße Statoranordnung für eine elektrische Maschine umfasst ein Gehäuseelement als eine Komponente und zumindest zwei Statorsegmente, die in dem Gehäuseelement angeordnet sind, als jeweils weitere Komponente, wobei eine der Komponenten eine Passfedernut aufweist und die andere der Komponenten eine zu der Passfedernut korrespondierende Passfeder zum Abstützen der einen Komponente an der anderen Komponente aufweist.

Die einzelnen Statorsegmente bilden im eingebauten Zustand den Stator der elektrischen Maschine. Das Gehäuseelement kann dabei das komplette Gehäuse der elektrischen Maschine sein oder es kann ein Teil des Gehäuses sein. Dabei umfasst die Statoranordnung zumindest zwei Statorsegmente. Die Statoranordnung kann auch mehrere Statorsegmente umfassen. Insbesondere ist die Anzahl der Statorsegmente ein Vielfaches von zwei. An einer der Komponenten der Statoranordnung ist zumindest eine Passfeder vorgesehen und an der anderen der Komponenten ist zumindest eine Passfedernut vorgesehen. Damit können die Komponenten einfach zueinander positioniert werden.

Die Verwendung von einzelnen Statorsegmenten vereinfacht den Zusammenbau des Stators, insbesondere bei elektrischen Maschinen mit großen Durchmessern. Damit werden große und teure Fertigungseinrichtungen nicht benötigt. Beispielsweise sind keine großen Anlagen zur Imprägnierung, insbesondere zur Vakuum-Druck-Imprägnierung, der Statorsegmente notwendig. Damit können Kosten bei der Herstellung der elektrischen Maschine eingespart werden.

Im bestimmungsgemäßen montierten Zustand ist zwischen den Statorsegmenten ein Zwischenraum gebildet, in dem ein Leistenelement angeordnet ist. Die Seitenflächen der Statorsegmente bzw. die Stoßstellen, die sich im eingebauten Zustand gegenüberstehen, sind derart ausgebildet bzw. geformt, dass sich zwischen benachbarten Statorsegmenten ein Zwischenraum ausbildet. Dabei kann jeweils auch nur in einen Bereich der gegenüberstehenden Seiten eine Aussparung eingebracht sein. Die Aussparung kann ebenso durch Abschrägung der Seitenflächen bereitgestellt werden. Damit wird ein Zwischenraum geschaffen, in dem ein Leistenelement angeordnet werden kann.

Der Zwischenraum und das Leistenelement sind derart ausgebildet, dass durch Beaufschlagen des jeweiligen Leistenelements mit einer in radialer Richtung nach außen gerichteten Kraft eine im Wesentlichen in Umfangsrichtung gerichtete Kraft von dem Leistenelement auf die Statorsegmente erzeugt ist. Durch das Beaufschlagen mit einer Kraft wird das Leistenelement in radialer Richtung zu dem Gehäuseelement hin bewegt. Das Leistenelement drückt gegen die beiden Statorsegmente, zwischen denen es angeordnet ist. Durch die Formgebung der jeweiligen Aussparungen in den Statorsegmenten und des Leistenelements bewirkt der Druck von dem Leistenelement gegen die Statorsegmente eine Kraft auf die Statorsegmente, die im Wesentlichen in Umfangsrichtung gerichtet ist. Mit anderen Worten werden die beiden Statorsegmente durch das Leistenelement in Umfangsrichtung auseinander gedrückt. Die Statorsegmente, die mit den Leistenelementen verspannt sind, bilden eine Art kreisförmiges Gewölbe aus, das mit einem einstellbaren Druck in das Gehäuseelement eingepresst werden kann. Durch eine entsprechende Einstellung der jeweiligen Kraft an den Leistenelementen können Fertigungstoleranzen von den Statorsegmenten und dem Gehäuseelement auf einfache Weise ausgeglichen werden.

Die Leistenelemente, die an dasselbe Statorsegment grenzen, sind mit einer unterschiedlichen Kraft beaufschlagt. Jedes zweite der Leistenelemente wird mit einer ersten Kraft beaufschlagt und die jeweils dazwischenliegenden Leistenelemente werden mit einer zweiten Kraft beaufschlagt. Dabei ist der Betrag der ersten Kraft größer als der Betrag der zweiten Kraft. Von den beiden Leistenelementen, die einem Statorsegment zugeordnet sind, wird also eines mit einer großen Kraft und das andere mit einer geringeren Kraft beaufschlagt. Die Passfedern und die Passfedernuten weisen üblicherweise Fertigungstoleranzen auf. Die Passfeder und die zugehörigen Passfedernuten können auch so ausgebildet sein, dass ein Spiel aufweisen. Auf der Seite, die dem Leistenelement zugewandt ist, das mit einer großen Kraft beaufschlagt ist, ergibt sich zwischen der Passfeder und der Passfedernut eine formschlüssige Verbindung. Auf der Seite, die dem Leistenelement zugewandt ist, das mit einer geringen Kraft beaufschlagt ist, ergibt sich ein Spiel zwischen der Passfeder und der Passfedernut. Damit erfolgt die Drehmomentabstützung in einer Richtung durch die Hälfte der Passfedern und die Drehmomentabstützung in der anderen Richtung durch die jeweils anderen Passfedern. Somit können die Fertigungstoleranzen einfach ausgeglichen werden.

Durch die Befestigung der Statorsegmente mittels der Passfeder und Passfedernuten sowie dem Einpressen der Statorsegmente durch die Leistenelemente kann eine bauraumsparende Anordnung erreicht werden. Insbesondere wird ein geringerer radialer Einbauraum im Vergleich zu derzeit bekannten Flanschverbindungen an den Stoßstellen der Statorsegmente, wie sie beispielsweise bei Direct-Drive-Windkraftanlagen verwendet werden, benötigt. Zusätzlich wird der Verschraubungsaufwand deutlich reduziert. Diese Anordnung ermöglicht die Montage der Statorsegmente im Inneren eines geschlossenen Gehäuses. Damit sind die bei elektrischen Maschinen standardmäßig gewünschten Schutzarten für geschlossene Maschinen, z.B. mit Oberflächenkühlung, realisierbar.

Bevorzugt weist das Gehäuseelement zumindest zwei Passfedern auf, wobei das Gehäuseelement im Wesentlichen hohlzylinderförmig ausgebildet ist und sich die Passfedern jeweils an der Innenseite des Gehäuseelements entlang der axialen Richtung erstrecken. Die Passfedern können als separates Bauteil gefertigt werden und an der Innenseite des Gehäuseelements angeordnet werden. Beispielsweise können die Passfedern mittels Schraubverbindungen an dem Gehäuse befestigt sein. Damit kann auf einfache Weise eine Passfeder bereitgestellt werden.

In einer Ausführungsform weist jedes der Statorsegmente zumindest eine Passfedernut auf, wobei jedes der Statorsegmente im Wesentlichen eine Form eines Hohlzylindersegments aufweist und sich die zumindest eine Passfedernut an der Außenfläche des Statorsegments entlang der axialen Richtung erstreckt. Die Passfedernut kann durch ein Fräsverfahren in das Statorsegment eingebracht werden. Die Passfedernut ist an der Außenfläche des Statorsegments angebracht, die der Innenseite des Gehäuseelements gegenübersteht. Bevorzug ist die Passfedernut mittig an der Außenfläche angeordnet.

Durch das Zusammenwirken der Passfedern in dem Gehäuseelement mit den jeweiligen Passfedernuten der Statorsegmente kann eine zuverlässige Übertragung des Drehmoments von dem Stator auf das Gehäuseelement bzw. das Gehäuse der elektrischen Maschine ermöglicht werden. Die erforderlichen Drehmomente werden durch Formschluss zwischen den Passfedern und den Passfedernuten übertragen. Die derzeit verwendeten stirnseitigen Flanschverbindungen können damit entfallen.

Weiterhin ist es vorteilhaft, wenn die jeweilige Kraft, mit der das Leistenelement beaufschlagt ist, mittels einer Spannvorrichtung einstellbar ist, mit der das Leistenelement an dem Gehäuseelement gehalten ist. Dabei ist bevorzugt für jedes der Leistenelemente eine Spannvorrichtung vorgesehen. Die Spannvorrichtung, mit der das Leistenelement am Gehäuseelement befestigt ist, kann zumindest eine Schraube umfassen.

Bevorzugt wird das Leistenelement mit mehreren Schraubverbindungen an dem Gehäuseelement gehalten. Die Schrauben können durch Bohrungen in dem Gehäuseelement von der Außenseite des Gehäuseelements in den Innenraum des Gehäuseelements führen, wobei die Schraubenköpfe an der Außenseite des Gehäuseelements angeordnet sind. Die Leistenelemente können entsprechende Gewinde aufweisen, in die die Schrauben gedreht werden. Zwischen der Außenseite des Gehäuseelements und dem Schraubenkopf kann eine Hülse positioniert sein. Mit der Spannvorrichtung kann die auf das Leistenelement wirkende Kraft bzw. das Anzugsmoment einfach angepasst werden.

In einer Ausgestaltung verjüngt sich eine Querschnittsfläche des Zwischenraums in radialer Richtung des Statorsegments nach außen hin. Dabei weist die sich senkrecht zur axialen Erstreckungsrichtung des Zwischenraums verlaufende Querschnittsfläche einen sich in radialer Richtung nach außen hin verjüngenden Querschnitt auf. Mit einer derartigen Formgebung des Zwischenraums kann durch ein Leistenelement, das in radialer Richtung nach außen bewegt wird, eine Verschiebung der jeweiligen Statorsegmente entlang der Umfangsrichtung erreicht werden.

Bevorzugt ist das Leistenelement stabförmig mit einer im Wesentlichen runden Querschnittsfläche ausgebildet. Ein derart ausgebildetes Leistenelement kann einfach und kostengünstig gefertigt werden. Zudem wird durch ein Leistenelement mit einer runden Querschnittsfläche das auf die Schrauben der Spannvorrichtung wirkende Biegemoment reduziert.

Die erfindungsgemäße elektrische Maschine umfasst die zuvor beschriebene Statoranordnung und einen Läufer, der innerhalb der Statoranordnung angeordnet ist. Die elektrische Maschine ist als Innenläufer ausgebildet. Mit der Statoranordnung können elektrischen Maschinen, die einen Durchmesser von mehreren Metern aufweisen, durch eine einfache Schraubmontage gefertigt werden.

Die zuvor im Zusammenhang mit der erfindungsgemäßen Statoranordnung beschriebenen Vorteile und Weiterbildungen können in gleicher Weise auf die erfindungsgemäße elektrische Maschine übertragen werden.

Nachfolgend wird die vorliegende Erfindung anhand der beigefügten Zeichnungen näher erläutert. Dabei zeigen
- FIG 1: ein Gehäuseelement einer Statoranordnung für eine elektrische Maschine in einer Perspektivansicht;
- FIG 2: ein Statorsegment der Statoranordnung in einer Perspektivansicht;
- FIG 3: die Statoranordnung mit einem eingebauten Statorsegment;
- FIG 4: die Statoranordnung, bei der alle Statorsegmente eingebaut sind;
- FIG 5: die Statoranordnung in einer geschnittenen Perspektivansicht;
- FIG 6: die Statoranordnung in einer ausschnittsweise dargestellten Perspektivansicht;
- FIG 7: die Statoranordnung in einer weiteren geschnittenen Perspektivansicht;
- FIG 8: die Statoranordnung in einer geschnittenen Seitenansicht;
- FIG 9: eine vergrößerte Darstellung gemäß FIG 8;
- FIG 10: eine Spannvorrichtung der Statoranordnung in einer geschnittenen Seitenansicht; und
- FIG 11: eine Spannvorrichtung der Statoranordnung gemäß FIG 10 in einer weiteren Ausführungsform.

Die nachfolgend näher geschilderten Ausführungsbeispiele stellen bevorzugte Ausführungsformen der vorliegenden Erfindung dar.

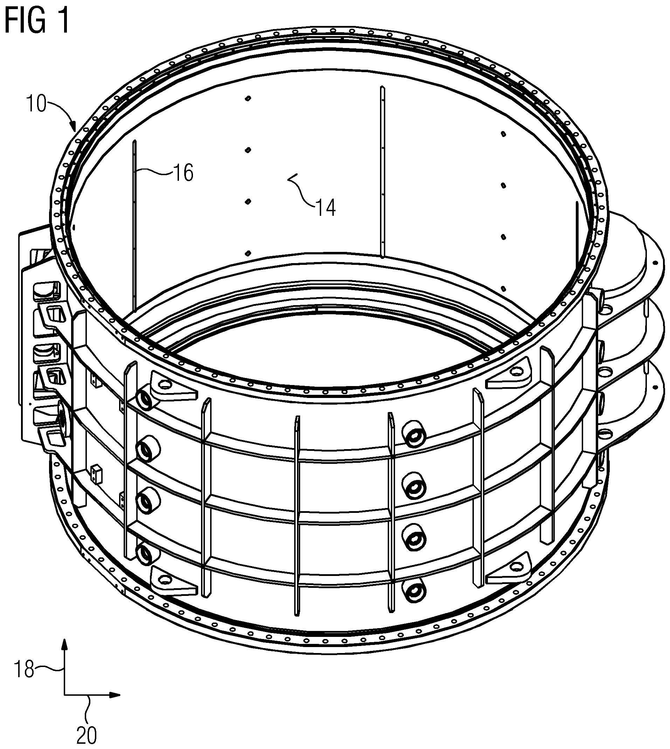

FIG 1 zeigt ein Gehäuseelement 10 einer Statoranordnung 12 einer elektrischen Maschine in einer Perspektivdarstellung. Das Gehäuseelement 10 weist im Wesentlichen die Form eines Hohlzylinders auf. Das Gehäuseelement 10 ist bevorzugt aus einem Metall, insbesondere Stahl, gefertigt. Das Gehäuseelement 10 dient der Anordnung eines außenliegenden Stators einer rotatorischen elektrischen Maschine. An der Innenseite 14 bzw. Innenfläche des Gehäuseelements 10 sind Passfedern 16 angeordnet. Die Passfedern 16 erstrecken sich zumindest bereichsweise entlang einer axialen Richtung 18 des Gehäuseelements 10 bzw. der Statoranordnung 12.

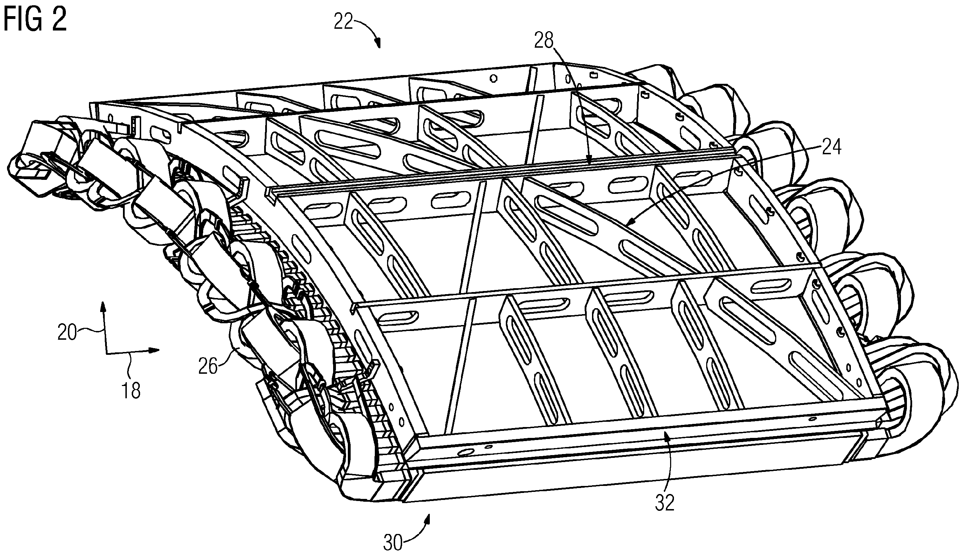

FIG. 2 zeigt ein Statorsegment 22 der Statoranordnung 12 in einer Perspektivdarstellung. Die Statoranordnung 12 umfasst zumindest zwei der Statorsegmente 22, die in dem in das Gehäuseelement 10 eingebauten Zustand den Stator der elektrischen Maschine bilden. Das Statorsegment 22 weist im Wesentlichen die Form eines Hohlzylindersegments auf. Das Statorsegment 22 weist eine Trägerstruktur 24 auf, die aus mehreren Streben gebildet ist. Die Streben können aus einem entsprechenden Metall gefertigt sein. Die Trägerstruktur 24 dient als Haltestruktur für das angeschweißte geschichtete Blechpaket des Statorsegments 22. Zudem weist die Trägerstruktur 24 Wickelköpfe 26 für die Wicklungen des Stators auf.

Des Weiteren umfasst das Statorsegment 22 eine Passfedernut 28, die sich entlang der axialen Richtung 18 des Statorsegments 22 bzw. der Statoranordnung 12 erstreckt. Vorliegend ist die Passfedernut 28 in eine der Streben, beispielsweise mittels eines Fräsverfahrens, eingebracht. An den Seitenflächen 30 der Trägerstruktur 24 bzw. Stoßstellen, an denen sich die Statorsegmente 22 im in das Gehäuseelement 10 eingebauten Zustand gegenüberstehen, ist eine Aussparung 32 vorgesehen, deren Zweck nachfolgend näher erläutert wird.

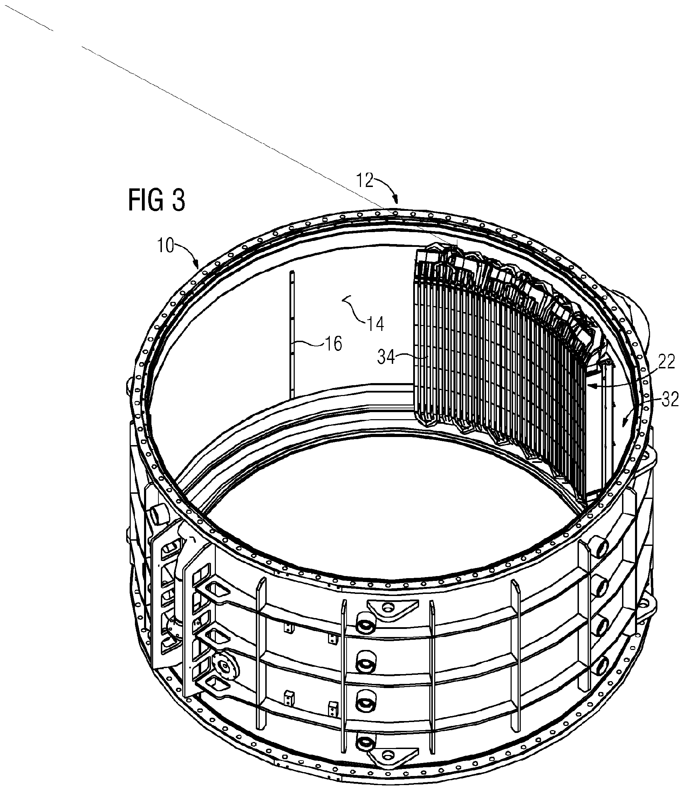

FIG 3 zeigt einer Statoranordnung 12 mit einem eingebauten Statorsegment 22. Dabei sind auch die Wicklungen 34 des Statorsegments 22 dargestellt. Die Statorsegmente 22 sind dabei derart im dem Gehäuseelement 10 angeordnet, dass die Passfeder 16 des Gehäuseelements 10 in die jeweilige Passfedernut 28 des Statorsegments 22 greift. Durch das Zusammenwirken der Passfeder 16 und der Passfedernut 28 kann eine Drehmomentabstützung in Umfangsrichtung 54 ermöglicht werden. Das Gehäuseelement 10 kann dabei so ausgebildet sein, dass die Statorsegmente 22 in axialer Richtung 18 abgestützt werden.

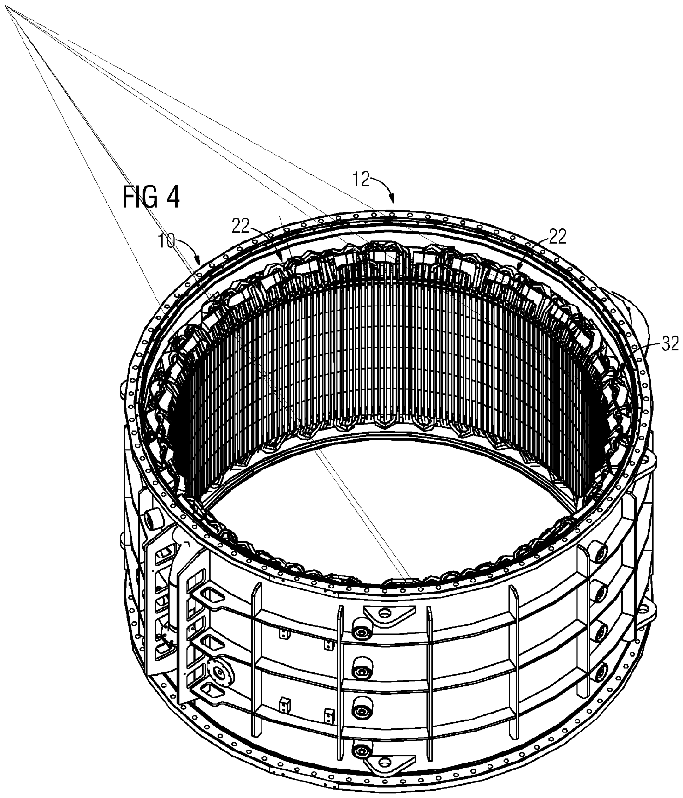

FIG 4 zeigt eine Statoranordnung 12 gemäß FIG 3, bei der alle Statorsegmente 22 in das Gehäuseelement 10 eingebaut sind. In dem vorliegenden Ausführungsbeispiel umfasst die Statoranordnung 12 sechs Statorsegmente 22. Im eingebauten Zustand sind Statorsegmente 22 jeweils miteinander zu verbinden.

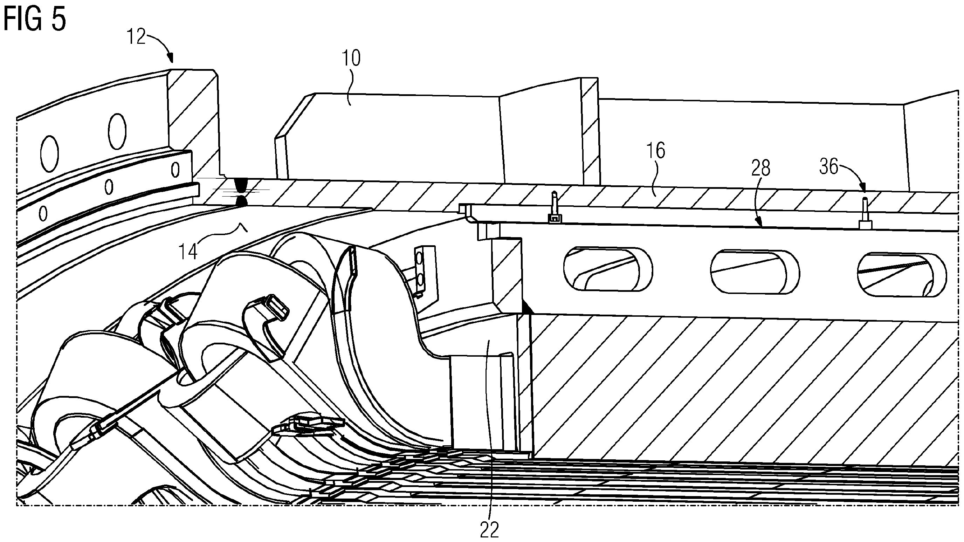

FIG 5 zeigt die Statoranordnung 12 in einer geschnittenen Perspektivdarstellung, in der die Passfeder 16 und die Passfedernut 28 genauer dargestellt sind. Die Passfeder 16 ist über mehrere Schraubverbindungen 36 an der Innenseite 14 des Gehäuseelements 10 befestigt. Zu diesem Zweck sind in der Passfeder 16 Bohrungen vorgesehen, durch die jeweils eine Schraube in ein Gewinde in dem Gehäuseelement 10 führt.

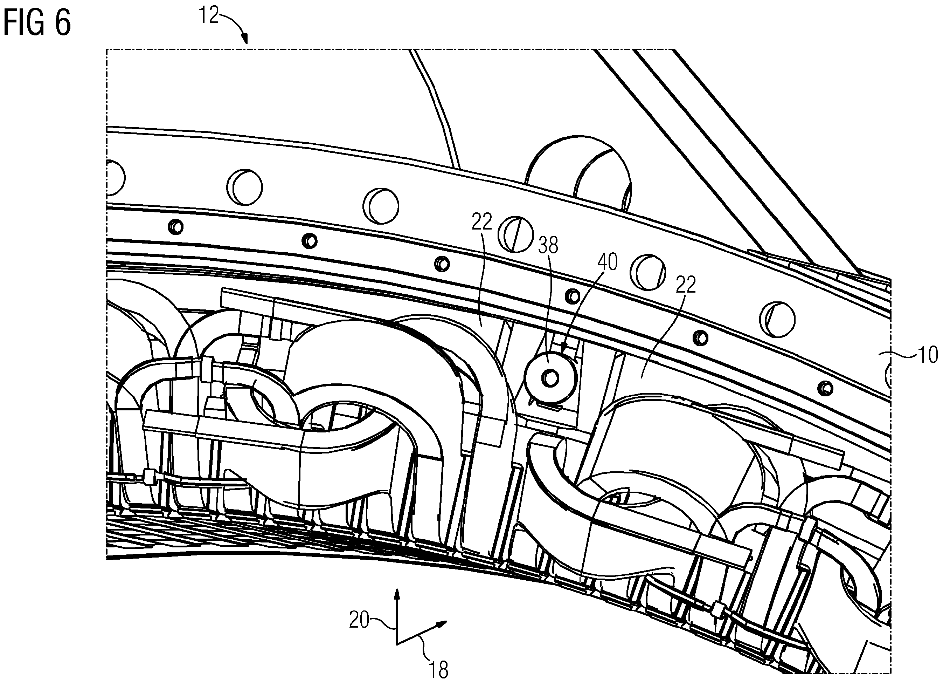

FIG 6 zeigt eine vergrößerte Perspektivansicht der Statoranordnung 12, in der ein Leistenelement 38 gezeigt ist. Das Leistenelement 38 weist im vorliegenden Ausführungsbeispiel eine runde Querschnittsfläche auf. Das Leistenelement 38 ist in einem Zwischenraum 40, der durch die Aussparungen 32 der benachbarten Statorsegmente 22 gebildet ist, angeordnet. Die Aussparungen 32 sind derart ausgestaltet, dass sich der Zwischenraum in radialer Richtung 20 nach außen hin, also in Richtung des Gehäuseelements 10, verjüngt.

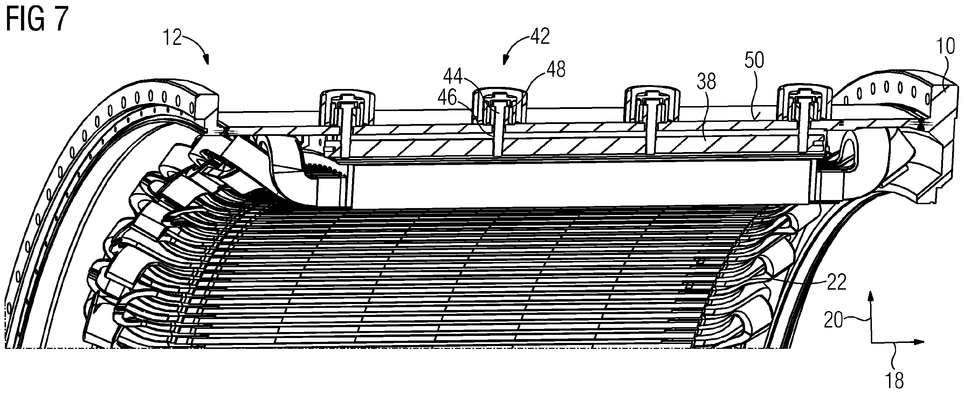

FIG 7 zeigt eine geschnittene Perspektivansicht der Statoranordnung 12, in der das Leistenelement 38 genauer dargestellt ist. Das Leistenelement 38 ist an der Innenseite 14 des Gehäuseelements 10 angeordnet. Dabei erstreckt sich das Leistenelement 38 in axialer Richtung 18 des Gehäuseelements 10 bzw. der Statoranordnung 12. Das Leistenelement 38 ist mit einer Spannvorrichtung 42 an dem Gehäuseelement 10 befestigt. Die Spannvorrichtungen 42 umfasst im vorliegenden Ausführungsbeispiel vier Schrauben 44, die durch jeweilige Bohrungen 46 bzw. Aussparungen des Gehäuseelements 10 geführt sind.

Jede der Schrauben 44 ist durch eine Hülse 48 geführt. Die Hülse 48 ist zwischen der Außenseite 50 des Gehäuseelements 10 und dem Kopf der Schraube 44 angeordnet. In dem Leistenelement 38 ist jeweils ein Gewinde 52 vorgesehen, in das die Schraube 44 gedreht ist. Über das Eindrehen der Schraube 44 kann die Position des Leistenelements 38 in radialer Richtung 20 der Statoranordnung 12 verändert werden.

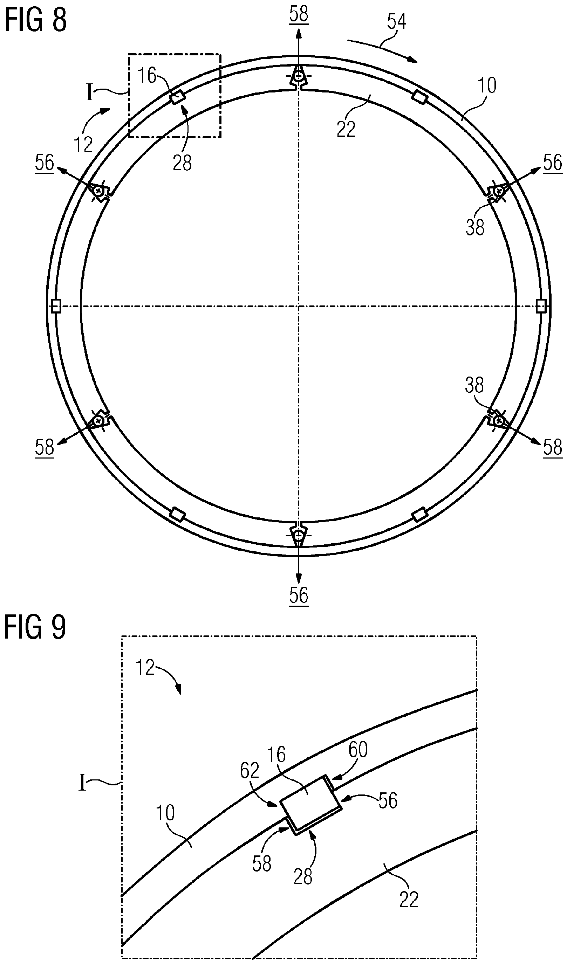

FIG 8 zeigt die Statoranordnung 12 in einer geschnittenen Seitenansicht. Hier ist verdeutlicht, dass die Spannvorrichtungen 42 in Umfangsrichtung 54 der Statoranordnung 12 alternierend mit einem hohen und einem im Vergleich dazu niedrigeren Anzugsmoment beaufschlagt werden. Die Spannvorrichtungen 42, die in FIG 8 mit einem Pfeil 56 gekennzeichnet sind, werden mit einem geringen Anzugsmoment beaufschlagt. Die Spannvorrichtungen 42, die in FIG. 8 mit einem Pfeil 58 gekennzeichnet sind, werden mit einem im Vergleich zu dem mit einem Pfeil 56 gekennzeichneten Spannvorrichtungen 42 mit einem höheren Anzugsmoment beaufschlagt. Über das jeweilige Anzugsmoment der Spannvorrichtung 42 bzw. die Kraft, mit der die Spannvorrichtung 42 beaufschlagt wird, wird die radiale Position des Leistenelements 38 eingestellt. Das Anzugsmoment erhöht sich mit der Anzahl der Umdrehungen, mit der die Schraub 44 in das Gewinde 52 des Leistenelements 38 gedreht wird.

Wenn ein Leistenelement 38 mittels der Spannvorrichtung 42 in radialer Richtung 20 zu dem Gehäuseelement 10 bewegt wird, drückt das Leistenelement 38 gegen die sich in Umfangsrichtung 54 gegenüberliegenden Flächen der Aussparungen 32 der Statorsegmente 22. Durch die Formgebung der Aussparungen 32 wird von dem Leistenelement 38 auf die beiden Statorsegmente 22 eine Kraft erzeugt, die im Wesentlichen in Umfangsrichtung 54 der Statoranordnung 12 gerichtet ist. Mit anderen Worten werden die beiden Statorsegmente 22 durch das sich zwischen ihnen befindende Leistenelement 38 in Umfangsrichtung 54 auseinandergedrückt.

Von den beiden Leistenelemente 38, die an dasselbe Statorsegment 22 grenzen, wird eines mit eines mit einer hohen Kraft bzw. mit einem hohen Anzugsmoment beaufschlagt, während das andere mit einer geringeren Kraft bzw. einem geringeren Anzugsmoment beaufschlagt wird. Die dadurch bewirkte Verschiebung der Statorsegment 22 ist in FIG. 9 dargestellt, die eine Detailansicht des Bereichs I aus FIG. 8 zeigt. Dies hat zur Folge, dass sich in einem ersten Bereich 56 zwischen den Seitenflächen der Passfeder 16 und der Passfedernut 28, die im Wesentlichen senkrecht zur Umfangsrichtung 54 verlaufen, eine formschlüssige Verbindung ausbildet. Der erste Bereich 56 der Anordnung aus Passfeder 16 und Passfedernut 28 ist dabei dem Leistenelement 38 zugewandt, das mit einem hohen Anzugsmoment beaufschlagt ist. In dem Bereich 58 der Anordnung aus Passfeder 16 und Passfedernut 28, der dem Leistenelement 38 zugewandt ist, das mit einem niedrigen Anzugsmoment beaufschlagt ist, ergibt sich zwischen den Seitenflächen der Passfeder 16 und der Passfedernut 28, die im Wesentlichen senkrecht zur Umfangsrichtung 54 verlaufen, eine Spielpassung. Die komplette Drehmomentübertragung von dem Gewölbe aus Statorsegmenten 22 zu dem Gehäuseelement 10 geschieht dann nur jeweils über die Hälfte der Passfedern 16 in einer Drehmomentrichtung und über die jeweils anderen Passfedern 16 in der anderen Drehmomentrichtung.

In dem in FIG 9 dargestellten Ausführungsbeispiel sind die Passfedernut 16 und die dazugehörige Aussparung 64 in dem Gehäuseelement 10 mit einer Spielpassung zueinander ausgebildet. In einem Bereich 60 der Anordnung aus Passfeder 16 und Aussparung 64, der dem Leistenelement 38 zugewandt ist, das mit einer hohen Kraft beaufschlagt ist, ergibt sich zwischen der Seitenfläche der Passfeder 16 und der Seitenfläche der Aussparung 64, die im Wesentlichen senkrecht zur Umfangsrichtung 54 verlaufen, ein Spiel. In dem Bereich 62, der dem Leistenelement 38 zugewandt ist, das mit einer geringen Kraft beaufschlagt ist, ergibt sich zwischen der Seitenfläche der Passfeder 16 und der Seitenfläche der Aussparung 64 eine spielfreie Anstellung. Damit können alle Fertigungstoleranzen auf einfache Weise ausgeglichen werden.

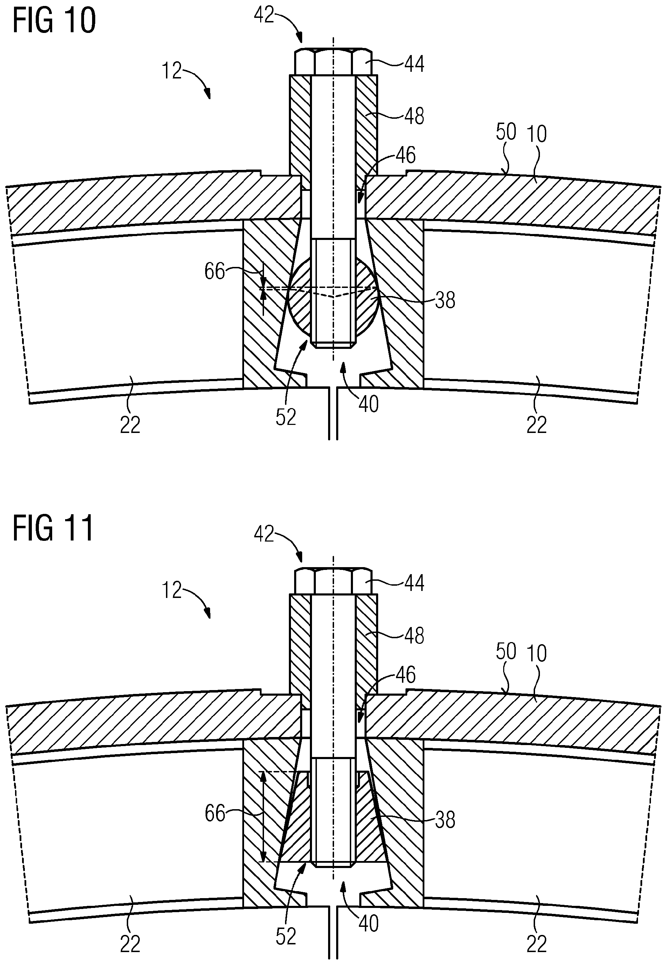

FIG 10 zeigt die Spannvorrichtung 42 in einer Detailansicht. Das Leistenelement 38 weist eine runde Querschnittsfläche auf. Durch die geometrische Ausgestaltung des Leistenelements 38 und des Zwischenraums 40 zwischen den beiden Statorsegmenten 22 ergibt sich eine Hebellänge 66, die dem Hebel des auf die Schraube 44 wirkenden Beigemoments entspricht. Bei der Verwendung eines Leistenelements 38 mit einer runden Querschnittsfläche ergibt sich einer geringe Hebellänge 66 und somit ein geringes Biegemoment, das auf die Schraube 44 wirkt. Im Vergleich dazu zeigt FIG. 11 eine Spannvorrichtung 42 in einer weiteren Ausführungsform, bei der das Leistenelement 38 eine trapezförmige Querschnittsfläche aufweist. Wie in FIG. 11 zu erkennen ist, ergibt sich bei einem trapezförmigen Leistenelement 38 im Vergleich zu einem runden Leistenelement 38 eine deutlich größere Hebellänge 66 und damit ein höheres Biegemoment, das auf die Schraube 44 wirkt.

## Patentansprüche

1. Statoranordnung (12) für eine elektrische Maschine mit
- einem Gehäuseelement (10) als eine Komponente und
- zumindest zwei Statorsegmenten (22), die in dem Gehäuseelement (10) angeordnet sind, als jeweils weitere Komponente, wobei
- eine der Komponenten eine Passfedernut (28) aufweist,
- die andere der Komponenten eine zu der Passfedernut (28) korrespondierende Passfeder (16) zum Abstützen der einen Komponente an der anderen Komponente aufweist, und
- im bestimmungsgemäßen montierten Zustand zwischen den Statorsegmenten (22) ein Zwischenraum (40) gebildet ist, in dem ein Leistenelement (38) angeordnet ist,
**dadurch gekennzeichnet, dass**
- der Zwischenraum (40) und das Leistenelement (38) derart ausgebildet sind, dass durch Beaufschlagen des jeweiligen Leistenelements (38) mit einer in radialer Richtung (20) nach außen gerichteten Kraft eine im Wesentlichen in Umfangsrichtung (54) gerichtete Kraft von dem Leistenelement (38) auf die Statorsegmente (22) erzeugt ist und
- die Leistenelemente (38), die an dasselbe Statorsegment (22) grenzen, mit einer unterschiedlichen Kraft beaufschlagt sind.

2. Statoranordnung (12) nach Anspruch 1, **dadurch gekennzeichnet, dass** das Gehäuseelement (10) zumindest zwei Passfedern (16) aufweist, wobei das Gehäuseelement (10) im Wesentlichen hohlzylinderförmig ausgebildet ist und sich die Passfedern (16) jeweils an der Innenseite (14) des Gehäuseelements (10) entlang der axialen Richtung (18) erstrecken.

3. Statoranordnung (12) nach Anspruch 1 oder 2, **dadurch gekennzeichnet, dass** jedes der Statorsegmente (22) zumindest eine Passfedernut (28) aufweist, wobei jedes der Statorsegmente (22) im Wesentlichen eine Form eines Hohlzylindersegments aufweist und sich die zumindest eine Passfedernut (28) an der Außenfläche des Statorsegments (22) entlang der axialen Richtung (18) erstreckt.

4. Statoranordnung (12) nach einem der vorhergehenden Ansprüche, **dadurch gekennzeichnet, dass** die jeweilige Kraft, mit der das Leistenelement (38) beaufschlagt ist, mittels einer Spannvorrichtung (42) einstellbar ist, mit der das Leistenelement (38) an dem Gehäuseelement (10) gehalten ist.

5. Statoranordnung (12) nach einem der vorhergehenden Ansprüche, **dadurch gekennzeichnet, dass** sich eine Querschnittsfläche des Zwischenraums (40) in radialer Richtung (20) des Statorsegments (22) nach außen hin verjüngt.

6. Statoranordnung (12) nach einem der vorhergehenden Ansprüche, **dadurch gekennzeichnet, dass** das Leistenelement (38) stabförmig mit einer im Wesentlichen runden Querschnittsfläche ausgebildet ist.

7. Elektrische Maschine mit einer Statoranordnung (12) nach einem der vorhergehenden Ansprüche und einem Läufer, der innerhalb der Statoranordnung (12) angeordnet ist.

## Claims

1. Stator arrangement (12) for an electrical machine with
- a housing element (10) as one component and
- at least two stator segments (22) which are disposed in the housing element (10), as further components in each case, wherein
- one of the components has a feather key groove (28),
- the other of the components has a feather key (16) corresponding to the feather key groove (28) for supporting the one component on the other component, and
- in the correctly installed state, a space (40) is formed between the stator segments (22), in which a strip element (38) is disposed,
**characterised in that**
- the space (40) and the strip element (38) are embodied such that, by applying a force directed outwards in a radial direction (20) to the respective strip element (38), a force from the strip element (38) to the stator segments (22) directed essentially in the circumferential direction (54) is created, and
- the strip elements (38) which adjoin the same stator segment (22) have a different force applied to them.

2. Stator arrangement (12) according to claim 1,
**characterised in that** the housing element (10) has at least two feather keys (16), wherein the housing element (10) is essentially embodied in the shape of a hollow cylinder and the feather keys (16) extend in each case on the inner side (14) of the housing element (10) in the axial direction (18).

3. Stator arrangement (12) according to claim 1 or 2,
**characterised in that** each of the stator segments (22) has at least one feather key groove (28), wherein each of the stator segments (22) is essentially in the shape of a hollow cylinder segment and the at least one feather key groove (28) extends on the outer surface of the stator segment (22) in the axial direction (18).

4. Stator arrangement (12) according to one of the preceding claims, **characterised in that** the respective force which is applied to the strip element (38) is able to be set by means of a clamping device (42) with which the strip element (38) is held on the housing element (10).

5. Stator arrangement (12) according to one of the preceding claims, **characterised in that** a cross-sectional surface of the space (40) narrows outwards in the radial direction (20) of the stator segment (22).

6. Stator arrangement (12) according to one of the preceding claims, **characterised in that** the strip element (38) is embodied in a rod shape with an essentially round cross-sectional surface.

7. Electrical machine with a stator arrangement (12) according to one of the preceding claims and a rotor which is arranged inside the stator arrangement (12).

## Revendications

1. Agencement (12) de stator d'une machine électrique comprenant
- un élément (10) formant carcasse en tant que premier composant et
- au moins deux segments (22) de stator, qui sont disposés dans l'élément (10) formant carcasse, en tant que respectivement un autre composant, dans lequel
- l'un des composants a une rainure (28) de clavette,
- l'autre des composants a une clavette (16) correspondant à la rainure (28) de clavette pour l'appui de l'un des composants sur l'autre et
- dans l'état monté comme il convient, il est formé, entre les segments (22) du stator un espace (40) intermédiaire, dans lequel est monté un élément (38) formant baguette,
**caractérisé en ce que**
- l'espace (40) intermédiaire et l'élément (38) formant baguette sont constitués de manière à ce que, en appliquant l'élément (38) formant baguette avec une force dirigée vers l'extérieure dans la direction (20) radiale, il est produit une force dirigée sensiblement dans la direction (54) périphérique de l'élément (38) formant baguette au segment (22) de stator et
- les éléments (38) formant baguette, qui sont voisins du même segment (22) de stator, sont soumis à une force différente.

2. Agencement (12) de stator suivant la revendication 1, **caractérisé en ce que** l'élément (10) formant carcasse a au moins deux clavettes (16), l'élément (10) formant carcasse étant conformé sensiblement sous la forme d'un cylindre creux et les clavettes (16) s'étendant chacune le long de la direction (18) axiale du côté (14) intérieur de l'élément (10) formant carcasse.

3. Agencement (12) de stator suivant la revendication 1 ou 2, **caractérisé en ce que** chacun des segments (22) de stator a au moins une rainure (28) de clavette, chacun des segments (22) de stator ayant sensiblement la forme d'un segment de cylindre creux et la au moins une rainure (28) de clavette s'étendant, suivant la direction (18) axiale, sur la surface extérieure du segment (22) de stator.

4. Agencement (12) de stator suivant l'une des revendications précédentes, **caractérisé en ce que** la force, avec laquelle l'élément (38) formant baguette est appliqué, est réglable au moyen d'un dispositif (42) de serrage, par lequel l'élément (38) formant baguette est maintenu sur l'élément (10) formant carcasse.

5. Agencement (12) de stator suivant l'une des revendications précédentes, **caractérisé en ce qu'**une surface de section transversale de l'espace (40) intermédiaire se rétrécit vers l'extérieur dans la direction (20) radiale du segment (22) de stator.

6. Agencement (12) de stator suivant l'une des revendications précédentes, **caractérisé en ce que** l'élément (38) formant baguette est constitué sous la forme d'un barreau ayant une surface de section transversale sensiblement circulaire.

7. Machine électrique ayant un agencement (12) de stator suivant l'une des revendications précédentes et un rotor qui est disposé à l'intérieur de l'agencement (12) de stator.
